# FASCICULE DE BREVET EUROPEEN

(11) **EP 0 346 227 B1**
(45) Date de publication et mention de la délivrance du brevet: **20.01.1993**
(21) Numéro de dépôt: 89401578.3
(22) Date de dépôt: 07.06.1989
(51) Int. Cl.: F16F 13/00

(54) **Perfectionnements aux dispositifs antivibratoires hydrauliques**
Änderungen an hydraulischen Antischwingungsvorrichtungen
Modifications of hydraulic antivibration devices

(30) Priorité: 09.06.1988 FR 8807699
(43) Date de publication de la demande: 13.12.1989
(73) Titulaire: HUTCHINSON, F-75008 Paris (FR)
(72) Inventeur: Bellamy, Alain, Naveil F-41100 Vendôme (FR); Chauvet, Ludovic, F-41100 Vendôme (FR)
(74) Mandataire: Behaghel, Pierre

(56) Documents cités:
- EP-A- 0 027 751
- EP-A- 0 154 828
- FR-A- 2 392 285
- FR-A- 2 599 451
- GB-A- 2 041 485
- US-A- 4 742 999
- PATENT ABSTRACTS OF JAPAN, vol. 12, no. 91 (M-679)[2938], 24 mars 1988, page 89 M 679; & JP-A-62 228 726 (KINUGAWA RUBBER IND. CO. LTD) 07-10-1987

## Description

### Perfectionnements aux dispositifs antivibratoires hydrauliques.

L'invention est relative aux dispositifs antivibratoires hydrauliques destinés à être interposés aux fins d'amortissement et de liaison, voire de support, entre deux éléments rigides tels qu'un châssis de véhicule et que le moteur de ce véhicule.

Elle concerne plus particulièrement, parmi ces dispositifs, ceux qui comportent :
- deux armatures rigides solidarisables respectivement avec les deux éléments rigides à réunir,
- un corps en élastomère reliant entre elles les deux armatures et formant au moins en partie avec celles-ci deux chambres étanches et déformables,
- un passage étranglé faisant communiquer en permanence les deux chambres entre elles,
- une masse de liquide remplissant les deux chambres et le passage étranglé,
- et un clapet déformable délimitant en partie l'une des deux chambres et soit l'autre (B) desdites chambres, soit une troisième chambre également étanche et déformable, ledit clapet étant monté avec une possibilité de déformation limitée entre deux grilles.

Comme on le sait, avec un tel dispositif,
- les oscillations de relativement grande amplitude et relativement basse fréquence telles que celles dues au "hachis" engendré sur le véhicule par les cahots de la route ont pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées,
- les vibrations de relativement petite amplitude et relativement haute fréquence, telles que celles dues au fonctionnement du moteur au ralenti, se traduisent par des vibrations du clapet susceptibles d'atténuer la transmission des vibrations en cause.

Dans les réalisations connues des dispositifs antivibratoires du genre ci-dessus, la périphérie du clapet déformable est serrée entre deux sièges rigides solidaires des grilles, et c'est la zone centrale de ce clapet qui est sujette aux déplacements de plus grande amplitude, déplacements limités par butée de cette zone centrale contre les grilles.

Dans certains cas, les applications successives de ladite zone centrale contre les grilles engendrent des bruits de claquement.

Pour remédier à cet inconvénient il a déjà été proposé de constituer le clapet déformable par un disque plat à bord libre dont le centre seul est serré entre deux picots faisant partie respectivement des deux grilles et faisant saillie l'un vers l'autre (voir le brevet JAPON 62-228726).

Cette formule présente encore un certain nombre d'inconvénients concernant notamment les risques de poinçonnage du centre du clapet par les picots, l'importance des déformations imposées à ce clapet à proximité des picots, les brusques applications du clapet contre les grilles...

L'invention a pour but, surtout, de remédier à ces différents inconvénients.

A cet effet, les dispositifs antivibratoires du genre en question selon l'invention comprennent encore un clapet agencé et monté de façon telle que seule sa zone centrale soit en permanence en contact avec les deux grilles et serrée entre celles-ci et ils sont essentiellement caractérisés en ce que les surfaces, des deux grilles, tournées vers le clapet sont planes et en ce que ledit clapet. se présente sous la forme d'une lentille biconvexe.

L'invention comprend, mise à part cette disposition principale, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre en coupe axiale un support antivibratoire hydraulique établi selon l'invention.

La figure 2 montre en coupe axiale, à plus grande échelle, la portion centrale de ce support, le clapet étant représenté en sa position de repos.

La figure 3 diffère seulement de la figure 2 en ce que le clapet est représenté en l'une de ses deux positions déformées extrêmes.

D'une façon connue en soi, le support considéré comprend :
- une embase rigide 1 constituée par un plot central 1₁ prolongé vers le haut par un goujon 1₂ en attente,
- un anneau rigide 2 constitué par deux plaquettes annulaires soudées l'une contre l'autre, chacune de ces plaquettes étant délimitée intérieurement par un bord rabattu 2₁ et étant prolongée vers l'extérieur par deux pattes 2₂ elles-mêmes perforées par des trous de fixation 2₃,
- une paroi tronconique épaisse en caoutchouc 3 présentant une bonne résistance à la compression axiale de façon à jouer un rôle de "support" et reliant de façon étanche l'embase 1 à l'anneau 2,
- un soufflet mince et flexible 4 relié de façon étanche à l'anneau 2 et délimitant un boîtier fermé avec cet anneau, la paroi 3 et l'embase 1,
- un capot rigide 5 de protection du soufflet dont le pourtour est fixé sur l'anneau 2,
- une cloison rigide intermédiaire 6 divisant le boîtier en deux chambres, savoir une chambre de travail A du côté de la paroi 3 et une chambre de compensation B du côté du soufflet 4,
- un passage étranglé 7 reliant les deux chambres A et B entre elles, passage de préférence évidé dans le pourtour rigide de la cloison intermédiaire 6,
- une masse de liquide L remplissant les deux chambres et le passage étranglé,
- et un clapet 8 monté entre deux grilles ou plaques perforées planes et parallèles 9 et 10 faisant partie de la cloison intermédiaire, ce montage étant effectué de façon telle que l'amplitude des débattements axiaux des différents points du clapet soit limitée à une valeur inférieure à 1 mm et de préférence de l'ordre de 0,5 mm.

L'ensemble des plages périphériques du soufflet flexible 4, du capot 5 et de la cloison intermédiaire 6 sont serties l'une contre l'autre par rabattement du rebord 2₁ compris par l'une des deux plaquettes constitutives de l'anneau 2 contre l'autre plaquette, le rebord 2₁ de cette autre plaquette étant, quant à lui, noyé dans la grande base de la paroi tronconique épaisse 3.

L'invention concerne plus particulièrement le clapet 8.

Ce clapet est constitué en un matériau déformable, de préférence élastique : il s'agit par exemple d'un élastomère, armé ou non par une toile appropriée.

En outre il est agencé de façon telle que seule sa zone centrale soit en permanence en contact avec les grilles et serrée ou pincée entre ces grilles, le pourtour du clapet étant flottant.

A cet effet il présente la forme générale d'une lentille biconvexe, chaque face étant bombée avec une courbure continue, avantageusement sphérique.

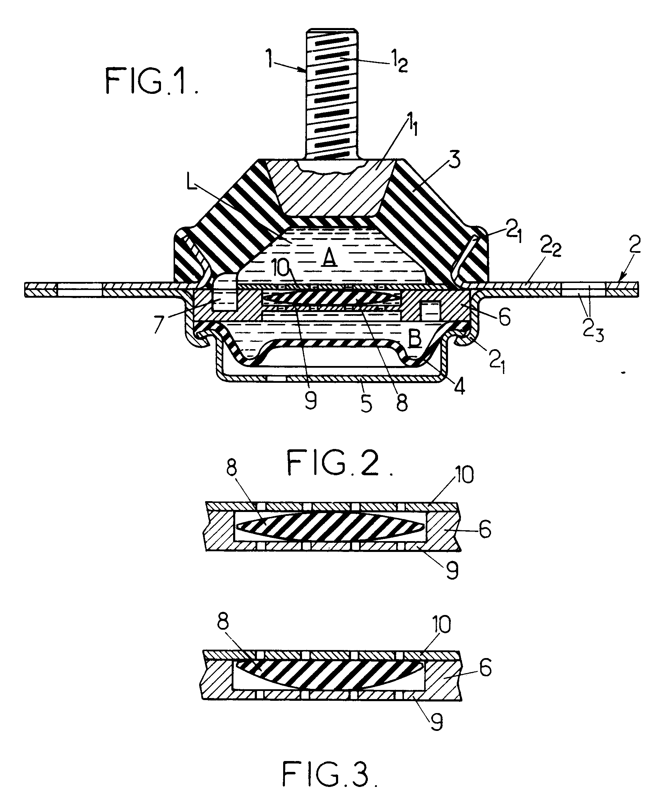

Sur la figure 2, le clapet 8 occupe sa position médiane de repos alors que, sur la figure 3, il est représenté en l'une de ses deux positions de déformation extrêmes, pour laquelle il est appliqué tout au long de l'une de ses deux faces transversales, alors devenue plane, contre la grille 10 en regard : pour cette position, le clapet obture tous les orifices de la grille 10 considérée de sorte que toute communication est interrompue à travers les grilles 9 et 10 entre les deux chambres A et B.

Lors du fonctionnement du dispositif, les déformations imposées au clapet par les va-et-vient axiaux du liquide dus aux oscillations ou vibrations à amortir ont pour effet d'appliquer le clapet alternativement, d'une manière extrêmement progressive, contre chacune des grilles qui l'encadrent, à la façon d'un roulement, et non pas d'appliquer brusquement toute une plage au moins de ce clapet contre la grille en regard, ce qui réduit, voire supprime l'effet de claquement et le bruit qui en résulte.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où le clapet serait constitué par une plaquette bombée de contour non circulaire, par exemple rectangulaire ou carrée,
- celles où le clapet encadré par ses deux grilles serait prévu, non pas sur la cloison intermédiaire 6, mais en un autre emplacement de la face interne de la chambre de travail A, et en particulier au voisinage de l'embase 1, ce clapet contrôlant alors la communication entre la chambre A et une troisième chambre (non représentée), cette troisième chambre étant également déformable et délimitée à cet effet par une nouvelle membrane flexible étanche dont la face extérieure à la chambre considérée délimiterait une chambre à air éventuellement garnie d'une mousse ou serait mise à l'air libre,
- celles où le dispositif antivibratoire considéré serait un manchon travaillant essentiellement selon une direction diamétrale et pour lequel les deux armatures rigides seraient tubulaires, s'entourant l'une l'autre, et de préférence de révolution et coaxiales au moins sous charge,
- et celles où le passage étranglé serait évidé dans d'autres portions du dispositif que le pourtour de la cloison intermédiaire, et notamment à travers la zone centrale du clapet lui-même.

## Revendications

1. Dispositif antivibratoire hydraulique destiné à être interposé entre deux éléments rigides, comportant deux armatures rigides (1,2) solidarisables respectivement avec les deux éléments rigides à réunir ; un corps en élastomère (3) reliant entre elles les deux armatures et formant au moins en partie avec celles-ci deux chambres étanches et déformables (A,B) ; un passage étranglé (7) faisant communiquer en permanence les deux chambres entre elles ; une masse de liquide (L) remplissant les deux chambres et le passage étranglé ; et un clapet déformable (8) délimitant en partie l'une des deux chambres (A) et soit l'autre (B) desdites chambres, soit une troisième chambre également étanche et déformable, ledit clapet étant monté avec une possibilité de déformation limitée entre deux grilles (9,10) de façon telle que seule sa zone centrale soit en permanence en contact avec ces deux grilles et serrée entre celles-ci, caractérisé en ce que les surfaces des deux grilles tournées vers le clapet sont planes et en ce que le clapet (8) se présente sous la forme d'une lentille biconvexe.

## Patentansprüche

1. Hydraulische Antischwingungsvorrichtung, die zwischen zwei starren Elementen einfügbar ist, mit zwei starren Armaturen (1, 2), die mit den beiden starren Elementen verbindbar sind, mit einem elastomeren Körper (3), der zwischen den beiden starren Armaturen (1, 2) eingebunden ist und mit diesen wenigstens teilweise zwei dichte und verformbare Kammern (A, B) bildet, mit einem Drosselkanal (7), der die beiden Kammern ständig miteinander verbindet, mit einer die beiden Kammern und den Drosselkanal füllenden flüssigen Masse (L), mit einem verformbaren Ventil (8), das teilweise eine (A) der beiden Kammern und entweder die andere Kammer (B) oder eine dritte, ebenfalls dichte und verformbare Kammer begrenzt, wobei das Ventil mit einer begrenzten Verformbarkeitsmöglichkeit zwischen zwei Gittern (9, 10) derart angeordnet ist, daß nur sein zentraler Bereich in ständigem Kontakt mit den Gittern steht und zwischen diesen eingespannt ist, dadurch gekennzeichnet, daß die dem Ventil (8) zugewandten Oberflächen der beiden Gitter eben sind und daß das Ventil (8) sich in Form einer biconvexen Linse darstellt.

## Claims

1. Hydraulic antivibratory device intended to be interposed between two rigid elements, comprising two rigid frames (1,2) which can be fixed respectively to the two rigid elements to be joined together; an elastomer body (3) connecting the two frames together and forming at least partially therewith two sealed and deformable chambers (A,B); a restricted passage (7) causing the two chambers to communicate permanently with each other; a liquid mass (L) filling the two chambers and the restricted passage; and a deformable valve (8) which partially defines one of the two chambers (A) and either the other chamber (B), or a third also sealed and deformable chamber, said valve being mounted with a possibility of limited deformation between two grids (9,10), so that only its central zone is permanently in contact with these two grids and clamped therebetween, characterized in that the surfaces of the two grids which are turned towards the valve are flat and in that the valve (8) is in the form of a biconvex lens.
